# EUROPÄISCHE PATENTSCHRIFT

(11) **EP 1 031 012 B1**
(45) Veröffentlichungstag und Bekanntmachung des Hinweises auf die Patenterteilung: **28.04.2004**
(21) Anmeldenummer: 99936422.7
(22) Anmeldetag: 08.06.1999
(51) Int. Cl.: G01D 11/24

(54) **STROMSPULE**
CURRENT COIL
BOBINE D'INTENSITE

(30) Priorität: 19.06.1998 DE 29810989 U
(43) Veröffentlichungstag der Anmeldung: 30.08.2000
(73) Patentinhaber: ROBERT BOSCH GMBH, 70442 Stuttgart (DE)
(72) Erfinder: HOFMANN, Karl, D-71686 Remseck (DE); HAFNER, Martin, D-71229 Leonberg (DE); ZUCKER, Roland, D-74343 Sachsenheim (DE)
(86) Internationale Anmeldenummer: PCT/DE1999/001662
(87) Internationale Veröffentlichungsnummer: WO 1999/067600

(56) Entgegenhaltungen:
- DE-A- 4 438 763
- US-A- 5 161 742

## Beschreibung

### Stand der Technik

Die Erfindung geht von einer Stromspule, vorzugsweise zur Verwendung in einem Nadelbewegungsfühler für Kraftstoffeinspritzventile, nach der Gattung des Anspruchs 1 aus. Bei einer derartigen, aus der Schrift WO 90/06439 bekannten Stromspule ist ein zylinderförmiger Spulenkörper in eine entsprechende Aufnahmeöffnung eines Ventilhaltekörpers eines Kraftstoffeinspritzventiles eingesetzt und wirkt dort als Nadelbewegungsfühler zum Erfassen der Bewegung einer axial verschiebbaren Ventilnadel des Kraftstoffeinspritzventils. Dazu ist in das der Ventilnadel zugewandte Ende des Spulenkörpers ein metallischer Spulenkern eingesetzt, der von einer auf den Spulenkörper aufgebrachten Spulenwicklung, koaxial umgeben ist. Die Enden des Spulenwicklungsdrahtes sind dabei mit jeweils einem Anschlußkontaktdraht verbunden, der andererseits elektrische Anschlüsse für externe elektrische Anschlußleitungen aufweist. Dabei ist an der bekannten Stromspule weiterhin ein Drahtführungskörper vorgesehen, der auf die Anschlußkontaktdrähte am Spulenkörper aufgeschoben wird und diese so in ihrer Lage fixiert.

Dabei weist die bekannte Stromspule jedoch den Nachteil auf, daß nach dem Wickeln des Spulendrahtes der Wickeldrahtanfang und das Wickeldrahtende mit einer Zugentlastungsschlaufe an die Enden der Anschlußkontaktdrähte angelegt und angelötet werden müssen. Dieser Lötvorgang erfolgt dabei in fertigungstechnisch aufwendiger Handarbeit und kann nicht automatisiert werden. Zudem weist die bekannte Stromspule den Nachteil auf, daß sich die Wicklungen und Zugentlastungsschlaufen an den Anschlüssen beim Transport und der Montage der Stromspule leicht verschieben lassen, so daß die Stromspule leicht beschädigbar ist, was eine erhöhte Sorgfalt beim Transport und der Montage der Stromspule in den Nadelbewegungsfühler zur Folge hat.

### Vorteile der Erfindung

Die erfindungsgemäße Stromspule mit den kennzeichnenden Merkmalen des Anspruchs 1 hat demgegenüber den Vorteil, daß die Stromspule automatisch hergestellt, automatisch gelötet und dann zusätzlich umspritzt werden kann, so daß alle Drähte und Wicklungen derart fixiert sind, daß sie während des Transports der Stromspule beziehungsweise deren Einsetzen in einen Nadelbewegungsfühler nicht mehr verschoben oder beschädigt werden können. Dazu wurde der Spulenkörper der Stromspule erfindungsgemäß mit einer speziellen Drahtführung, vorzugsweise in Form einer Formnut versehen, die ein Einpressen der vorzugsweise als Formdraht ausgebildeten Anschlußkontaktdrähte erlaubt. Dabei ist durch die Formgebung, vorzugsweise als Nutprofil eine Fixierung des Anschlußkontaktdrahtes bereits nach dessen Einsetzen in die Formnut gewährleistet. Die Form des Anschlußkontaktdrahtes ergibt dabei eine sichere Fixierung nach allen Seiten und ermöglicht hohe Haltekräfte. Dabei werden die Anschlußkontaktdrähte, jeweils mit einer Zugentlastungsschlaufe versehen, in die Formnut eingesetzt, die vorzugsweise vollständig in den Spulenkörper eintaucht und die einen Längenausgleich des Anschlußkontaktdrahtes ermöglicht. Eine weitere Zugentlastungsschlaufe ist in vorteilhafter Weise an den Enden des Spulenwicklungsdrahtes vor der Befestigung am Anschlußkontaktdraht vorgesehen. Dabei sind diese Enden des Spulenwicklungsdrahtes in vorteilhafter Weise an Fixiernasen des Spulenkörpers geführt. Der Verbindungsabschnitt zwischen den Enden des Spulenwicklungsdrahtes zu den Anschlußkontaktdrähten erfolgt über eine Führung in einer entsprechenden, schräg zur Achse des Spulenkörpers verlaufenden Nut. Um die Drähte in ihrer Lage vollständig zu fixieren und gegen ein ungewolltes Verschieben zu sichern, ist der Spulenkörper zudem mit einem Kunststoffmaterial, vorzugsweise einem Heißkleber umschlossen.

Die erfindungsgemäße Stromspule kann dabei in besonders vorteilhafter Weise automatisiert hergestellt werden. Dazu werden zunächst die als Formdrähte ausgebildeten Anschlußkontaktdrähte in die entsprechenden Formnuten am Spulenkörper mit einer Zugentlastungsschlaufe und mit radial abstehenden Drahtenden eingepreßt. In einem weiteren Verfahrensschritt wird nunmehr der Spulendraht automatisch gewickelt, wobei der Spulendrahtanfang und das Spulendrahtende von der Wickelmaschine auf die radial abstehenden Enden der Anschlußkontaktdrähte gewickelt werden. In einem weiteren Verfahrensschritt werden beide Drahtenden vorzugsweise in einem Lötbad miteinander verlötet. Danach werden die Anschlußkontaktdrahtenden nach innen in Richtung Spulenkörper gebogen. Dabei bildet sich die Entlastungsschlaufe an den Enden des Spulenwicklungsdrahtes die an einer Fixiernase ausgerichtet und fixiert wird. In einem weitere Arbeitsgang wird nun die Stromspule vollständig mit einem Kunststoffmaterial, vorzugsweise Heißkleber umspritzt.

Dabei hat dieses neue Herstellungsverfahren der Stromspule den Vorteil, daß durch den nunmehr möglichen automatischen Herstellungsablauf eine hohe Fertigungssicherheit erreicht werden kann. Desweiteren ist insbesondere der Lötvorgang durch Tauchen besonders vorteilhaft. Durch das zusätzliche Umspritzen der Stromspule mit einem Kunststoff ist zudem eine hohe Sicherheit gegen ein ungewolltes Verändern der Wickeldrahtposition bei dem Transport beziehungsweise der Montage der Stromspule gegeben. Zudem bietet der geschlossene Kunststoffmantel einen zusätzlichen Schutz des Spulenbereiches und der Lötstellen vor schädlichen Umgebungseinflüssen.

Weitere Vorteile und vorteilhafte Ausgestaltungen des Gegenstandes der Erfindung sind der Zeichnung, der Beschreibung und den Ansprüchen entnehmbar.

### Zeichnung

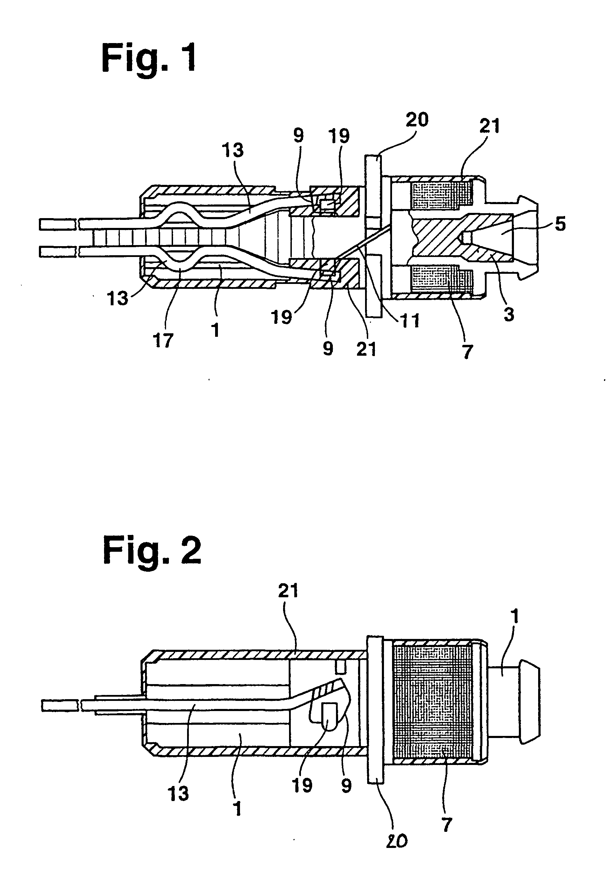

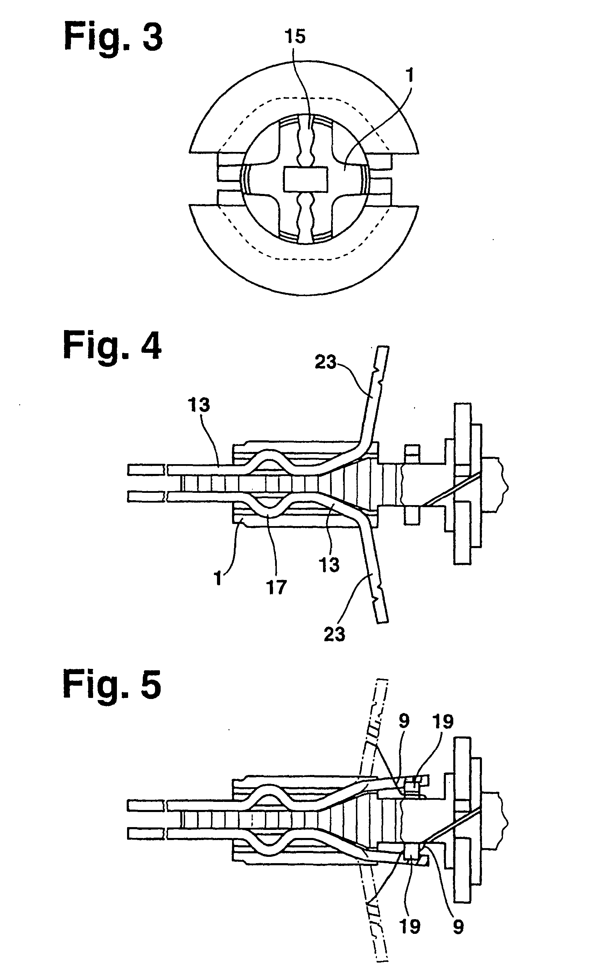

Ein Ausführungsbeispiel der erfindungsgemäßen Stromspule ist in der Zeichnung dargestellt und wird in der nachfolgenden Beschreibung näher erläutert.
Es zeigen die Figur 1 eine Gesamtschnittdarstellung der Stromspule, die Figur 2 eine um 90° zur Figur 1 gedrehte Ansicht, die Figur 3 eine Vorderansicht auf den Spulenkörper mit den darin angeordneten Formnuten und die Figuren 4 und 5 die Stromspule während verschiedener Herstellungsstadien in Teilschnitten.

### Beschreibung des Ausführungsbeispiels

Die Figuren 1 bis 5 zeigen ein Ausführungsbeispiel der erfindungsgemäßen Stromspule in verschiedenen Ansichten beziehungsweise Herstellungsstadien. Dabei weist die in den Figuren 1 und 2 vollständig dargestellte erfindungsgemäße Stromspule zunächst einen zylinderförmigen Spulenkörper 1 aus Kunststoff auf. Dieser Spulenkörper ist dabei zweiteilig ausgebildet und weist einen Kernteil und einen diesen umschließenden Mantelteil auf. Dabei ist in ein Ende des Spulenkörpers 1 ein metallischer Spulenkern 3 eingesetzt, der an seinem äußeren Ende eine konische Öffnung 5 aufweist, die in eine konische Öffnung am Spulenkörper 1 übergeht und in die bei eingebauter Stromspule ein bolzenförmiger Magnetanker des axial verschiebbaren Ventilgliedes (Ventilnadel) des Kraftstoffeinspritzventiles hineinragt. Desweiteren ist in Höhe des metallischen Spulenkerns 3 eine Spulenwicklung 7 koaxial zum Spulenkern 3 auf den Spulenkörper 1 aufgebracht. Die Enden 9 des Spulenwicklungsdrahtes der Spulenwicklung 7 sind dabei unter Bildung einer Zugentlastungsschlaufe über eine Schrägnut 11 im Spulenkörper 1 mit jeweils einem Ende eines Anschlußkontaktdrahtes 13 verbunden. Diese Anschlußkontaktdrähte 13 sind dabei jeweils in einer am Spulenkörper 1 vorgesehenen Formnut 15 (siehe Figur 3) eingepreßt, wobei an den Anschlußkontaktdrähten 13 jeweils eine Zugentlastungsschlaufe 17 vorgesehen ist, die vollständig in den Mantel des Spulenkörpers 1 eingetaucht ist. An ihrem der Spulenwicklung 7 abgewandten Enden ragen die Anschlußkontaktdrähte 13 aus dem Spulenkörper 1 axial hervor und bilden somit jeweils eine elektrische Anschlußstelle für eine separate elektrische Anschlußleitung. Für eine bessere Führung und Fixierung der Schlaufenenden 9 des Spulenwicklungsdrahtes der Spulenwicklung 7 sind weiterhin Fixiernasen 19 am Spulenkörper 1 vorgesehen, die die Drahtenden 9 in ihrer Lage halten. Desweiteren weist der Spulenkörper 1 einen radial vorstehenden Ringflansch 20 auf, mit dem der Spulenkörper 1 in einer Aufnahmebohrung eines Ventilhaltekörpers am Kraftstoffeinspritzventil fixiert wird. Zur sicheren Lagefixierung des Spulenwicklungsdrahtes und der Anschlußkontaktdrähte 13 ist der Spulenkörper 1 zudem an seiner radialen Umfangsfläche von einem Kunststoffmaterial, vorzugsweise einem Heißkleber 21 umschlossen, der bis auf die Anschlußstellen der Anschlußkontaktdrähte 13 sämtliche Drahtbauteile und Kontaktstellen der Stromspule umschließt.

Das erfindungsgemäße Verfahren zum Herstellen der erfindungsgemäßen Stromspule wird nun mit Hilfe der Teilschnittdarstellungen der Figuren 3 bis 5 näher erläutert. Dabei werden zunächst die als Formdrähte ausgebildeten Anschlußkontaktdrähte 13 in die entsprechenden Formnuten 15 des Spulenkörpers 1 eingepreßt, wobei eine Zugentlastungsschlaufe 17 vorgesehen wird. Die der Spulenwicklung 7 zugewandten Drahtenden 23 der Anschlußkontaktdrähte 13 stehen dabei zunächst radial vom Spulenkörper 1 ab. In einem weiteren Arbeitsschritt erfolgt nunmehr das Aufwickeln des Spulendrahtes auf den Spulenkörper 1 zur Bildung der Spulenwicklung 7. Daran anschließend werden nun die Enden 9 des Spulenwicklungsdrahtes 7 an je einem abstehenden Ende 23 der Anschlußkontaktdrähte 13 befestigt. In einem weiteren Arbeitsschritt werden diese Drahtkontaktstellen zwischen Spulenwicklungsdrahtenden 9 und Anschlußkontaktdrahtenden 23 vorzugsweise in einem Lötbad miteinander verlötet. Im Weiteren werden die abstehenden Drahtenden 23 entsprechend eingekürzt und in Richtung Spulenkörper 1 radial einwärts gebogen. Dabei entstehen bei diesem Einwärtsbiegen die Zugentlastungsschlaufen der Spulenwicklungsdrahtenden 9, die dann an den Fixiernasen 19 in ihrer Lage fixiert werden. In einem letzten Arbeitsschritt werden dann die drahtführenden Bereiche der Stromspule mit einem Kunststoff, vorzugsweise einem Heißkleber vollständig umspritzt.

Die erfindungsgemäße Stromspule wird dabei zur Erfassung der axialen Bewegung einer Ventilnadel eines Kraftstoffeinspritzventiles verwendet, kann alternativ jedoch auch für andere typische Anwendungen verwendet werden.

## Patentansprüche

1. Stromspule, vorzugsweise für einen Nadelbewegungsfühler für Kraftstoffeinspritzventile, mit einem zylinderförmigen Spulenkörper (1), in dessen eines Ende ein metallischer Spulenkern (3) eingesetzt ist, der von einer auf den Spulenkörper (1) aufgebrachten Spulenwicklung (7) koaxial umgeben ist, wobei die Enden (9) des Spulenwicklungsdrahtes mit jeweils einem Anschlußkontaktdraht (13) verbunden sind, an den andererseits eine elektrische Anschlußleitung anschließbar ist, **dadurch gekennzeichnet, daß** die Anschlußkontaktdrähte (13) jeweils in eine am Spulenkörper (1) vorgesehene Formnut (15) eingepreßt sind.

2. Stromspule nach Anspruch 1, **dadurch gekennzeichnet, daß** an den Anschlußkontaktdrähten (13) eine Zugentlastungsschlaufe (17) vorgesehen ist, die vollständig innerhalb des Spulenkörpers (1) angeordnet ist und die einen Längenausgleich am Anschlußkontaktdraht (13) ermöglicht.

3. Stromspule nach Anspruch 1, **dadurch gekennzeichnet, daß** der Spulenwicklungsdraht an seinen Befestigungsenden (9) zum Anschlußkontaktdraht (13) eine Zugentlastungsschlaufe aufweist.

4. Stromspule nach Anspruch 1, **dadurch gekennzeichnet, daß** die Enden (9) des Spulenwicklungsdrahtes in einer schräg verlaufenden Führungsnut (11) des Spulenkörpers (1) geführt sind.

5. Stromspule nach Anspruch 1, **dadurch gekennzeichnet, daß** der Spulenkörper (1) zumindest im Bereich der Anschlußkontaktdrähte (13) und des Spulenwicklungsdrahtes an seiner radialen Umfangsfläche vollständig von einem Kunststoffmaterial, vorzugsweise einem Heißkleber umschlossen ist.

6. Verfahren zum Herstellen einer Stromspule gemäß Anspruch 1, **gekennzeichnet durch** folgende Verfahrensschritte:
- Einpressen der als Formdrähte ausgebildeten Anschlußkontaktdrähte (13) in entsprechende Formnuten (15) am Spulenkörper (1) unter Vorsehen einer Entlastungsschlaufe (17) und mit radial abstehenden Drahtenden (23),
- Wickeln des Spulendrahtes (7) auf den Spulenkörper (1),
- Befestigen der Enden (9) des Spulenwicklungsdrahtes an je einem abstehenden Ende (23) der Anschlußkontaktdrähte (13),
- Verlöten der Drahtkontaktstellen zwischen Spulenwicklungsdrahtenden (9) und Anschlußkontaktdrahtenden (23), vorzugsweise in einem Lötbad,
- Abbiegen der abstehenden Drahtenden (23) der Anschlußkontaktdrähte (13) in Richtung Spulenkörper (1),
- vollständiges Umspritzen der drahtführenden Bereiche der Stromspule mit einem Kunststoffmaterial.

## Claims

1. Current coil, preferably for a needle motion sensor for fuel injection valves, having a cylindrical coil former (1), in one end of which a metallic coil core (3) is inserted which is coaxially surrounded by a coil winding (7) applied to the coil former (1), the ends (9) of the coil winding wire each being connected to a connecting contact wire (13), whose other end may be connected to an electrical connecting line, **characterized in that** the connecting contact wires (13) are each pressed into a shaped groove (15) provided on the coil former (1).

2. Current coil according to Claim 1, **characterized in that** a strain relief loop (17), which is arranged completely inside the coil former (1) and which makes linear compensation possible on the connecting contact wire (13), is provided on the connecting contact wires (13).

3. Current coil according to Claim 1, **characterized in that** the coil winding wire has a strain relief loop at its ends (9) which fix it to the connecting contact wire (13).

4. Current coil according to Claim 1, **characterized in that** the ends (9) of the coil winding wire are guided in a sloping guide groove (11) in the coil former (1).

5. Current coil according to Claim 1, **characterized in that**, at least in the region of the connecting contact wires (13) and the coil winding wire, the coil former (1) is completely surrounded on its radial circumferential surface by a plastic material, preferably a hot-melt adhesive.

6. Method for the production of a current coil according to Claim 1, **characterized by** the following method steps:
- pressing the connecting contact wires (13) in the form of shaped wires into corresponding shaped grooves (15) in the coil former (1), with provision of a strain relief loop (17) and with radially protruding wire ends (23),
- winding the coil wire (7) onto the coil former (1),
- fixing each of the ends (9) of the coil winding wire to a protruding end (23) of the connecting contact wires (13),
- soldering the wire contact points between the coil winding wire ends (9) and the connecting contact wire ends (23), preferably in a solder bath,
- bending back the protruding wire ends (23) of the connecting contact wires (13) in the direction of the coil former (1),
- completely extrusion-coating the wire-guiding regions of the current coil with a plastic material.

## Revendications

1. Bobine d'intensité pour un palpeur de mouvement d'aiguille pour des injecteurs de carburant, comportant un corps de bobine cylindrique (1) à l'extrémité duquel est enfiché un noyau de bobine métallique (3) entouré d'un enroulement de bobine (7) coaxial monté sur le corps de bobine (1), les extrémités (9) du fil d'enroulement de bobine étant chacune reliées avec un fil de contact de raccordement (13) auquel, de l'autre côté, une ligne de raccordement électrique peut être raccordée,
**caractérisée en ce que**
les fils de contact de raccordement (13) sont chacun introduits par pressage dans une rainure formée (15) prévue sur le corps de bobine (1).

2. Bobine d'intensité selon la revendication 1,
**caractérisée en ce qu'**
une boucle de soulagement de traction (17) est prévue sur les fils de contact de raccordement (13), elle est disposée totalement à l'intérieur du corps de bobine (1) qui permet une compensation de longueur sur les fils de contact de raccordement (13).

3. Bobine d'intensité selon la revendication 1,
**caractérisée en ce que**
le fil d'enroulement de bobine présente une boucle de soulagement de traction sur ses extrémités de fixation (9) au fil de contact de raccordement (13).

4. Bobine d'intensité selon la revendication 1,
**caractérisée en ce que**
les extrémités (9) du fil d'enroulement de bobine sont guidées dans une rainure de guidage inclinée (11) du corps de bobine (1).

5. Bobine d'intensité selon la revendication 1,
**caractérisée en ce que**
le corps de bobine (1) est enfermé au moins dans la zone des fils de contact de raccordement (13) et du fil d'enroulement de bobine intégralement sur sa surface radiale périphérique par un matériau synthétique, de préférence une colle thermique.

6. Procédé pour fabriquer une bobine d'intensité selon la revendication 1,
**caractérisé par**
les étapes de procédé suivantes :
- introduction par pressage dans des rainures correspondantes formées (15) au corps de bobine (1) des fils de contact de raccordement (13) constitués en fils formés en prévoyant une boucle de soulagement de traction (17) et comportant des extrémités de fil (23) écartées radialement,
- enroulement du fil de bobine (7) sur le corps de bobine (1),
- fixation des extrémités (9) du fil d'enroulement de bobine à chaque extrémité écartée (23) des fils de contact de raccordement (13),
- soudage des emplacements de contact de fil entre les extrémités de fils d'enroulement de bobine (9) et les extrémités de fils de contact de raccordement (23), de préférence dans un bain de soudure,
- pliage des extrémités de fils écartées (23) des fils de contact de raccordement (13) en direction du corps de bobine (1),
- enrobage intégral avec un matériau synthétique par injection des zones de la bobine d'intensité conduisant des fils.
